# FASCICULE DE BREVET EUROPEEN

(11) **EP 1 171 698 B1**
(45) Date de publication et mention de la délivrance du brevet: **14.12.2005**
(21) Numéro de dépôt: 01904026.0
(22) Date de dépôt: 01.02.2001
(51) Int. Cl.: F02B 33/10, F02B 33/14, F02B 75/30, F02B 53/08

(54) **Moteur surmontant la contre-pression échappement**
Auspufgegendruck überwindender Motor
Engine overcoming Exhaust Counterpressure

(30) Priorité: 02.02.2000 CA 2297393
(43) Date de publication de la demande: 16.01.2002
(73) Titulaire: Beaudoin, Normand, 92150 Suresnes (FR)
(72) Inventeur: Beaudoin, Normand, 92150 Suresnes (FR)
(74) Mandataire: Jaunez, Xavier
(86) Numéro de dépôt international: PCT/FR2001/000309
(87) Numéro de publication internationale: WO 2001/057377

(56) Documents cités:
- EP-A- 0 741 232
- CH-A- 112 460
- US-A- 1 433 650
- US-A- 1 606 479
- US-A- 1 851 530
- US-A- 3 826 086
- US-A- 3 993 029
- US-A- 4 185 597
- PATENT ABSTRACTS OF JAPAN vol. 013, no. 161 (M-815), 18 avril 1989 (1989-04-18) & JP 64 000321 A (MITSUBISHI MOTORS CORP), 5 janvier 1989 (1989-01-05)

## Description

Les principaux moteurs commerciaux sur le marché, qu'ils soient de type deux temps, quatre temps ou encore de type rotatif, ont tous en commun un même défaut, à savoir, celui de ne pas supporter de restriction au niveau de l'échappement. C'est ce qui les rend beaucoup plus difficilement filtrables, car normalement, plus un filtré est efficace, plus il occasionne de restriction. La difficulté de filtration laisse par conséquent ces moteurs dans leur état très polluant.

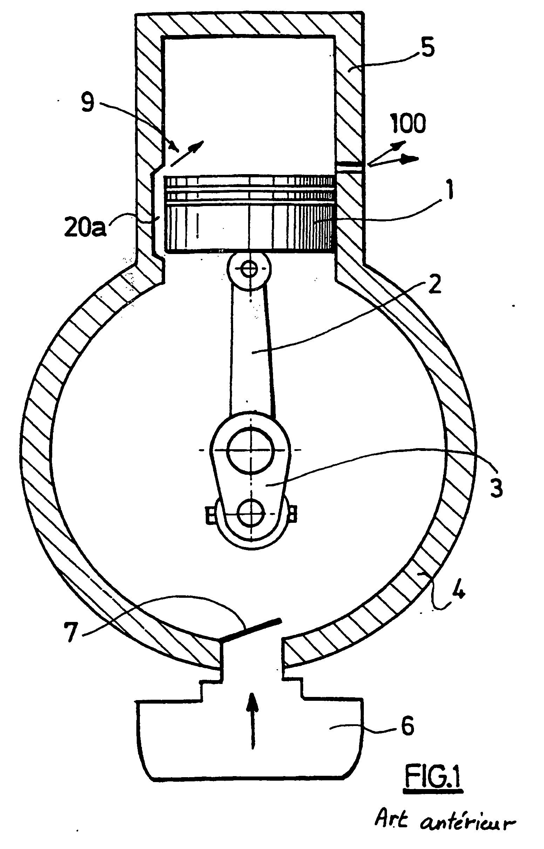

Si l'on prend par exemple les moteurs deux temps (figure 1), l'échappement est obtenu par la pression des gaz neufs en provenance de la base du moteur (voir flèche 9) sur les vieux gaz se trouvant encore dans le cylindre 5. Ces derniers peuvent s'échapper par une lumière située dans le côté du cylindre (voir flèches 100). Si l'on bloque cette lumière et que par conséquent l'on restrictionne la sortie des gaz brûlés, les gaz neufs n'auront pas assez de puissance pour emplir le cylindre, alors que les gaz brûlés se comprimeront plutôt que de sortir, avec pour résultat que les gaz se trouvant dans la chambre de combustion lors de la prochaine compression seront peu combustibles et explosifs, parce qu'en forte partie constitués de vieux gaz. Le moteur suffoquera et s'arrêtera.

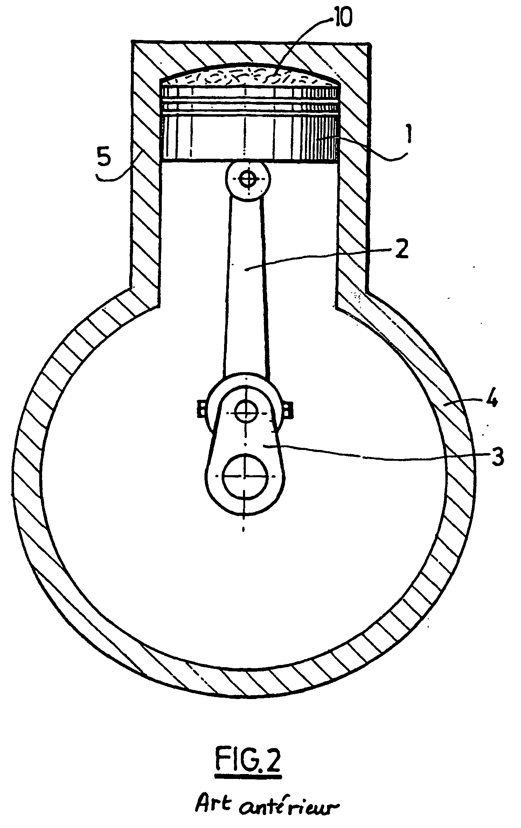

Un phénomène différent mais similaire se produit si l'on restrictionne la sortie des gaz brûlés d'un moteur à quatre temps ou rotatif (Figure 2).

La difficulté vient du fait que, lors de l'explosion, les chambres de combustion 10 doivent conserver une certaine grosseur pour obtenir une compression optimale et explosive des gaz. Par conséquent, comme le trajet du piston est identique lors de la phase d'évacuation du moteur à celle d'explosion, le cylindre a une certaine grosseur, même à la fin de l'évacuation (Figure 2). Dès lors, comme dans le cas des moteurs deux temps, si l'on restrictionne la sortie des gaz usés, ceux-ci auront encore assez d'espace pour se compresser et donc, plutôt que de s'évacuer, demeureront dans les chambres et se re-dilateront lors de la redescente du piston, avec comme résultat que l'admission de gaz neufs sera elle aussi déficiente. L'on n'a qu'à porter sa main sur le tuyau d'échappement d'une voiture pour vérifier que le moteur est alors très fragile et facile à asphyxier et à étouffer. L'on comprend facilement comme dans le premier cas que ces moteurs ne tolèrent pas la restriction que pourrait offrir un filtrage efficace.

Nous pensons que ce défaut des moteurs à combustion interne d'avoir un échappement plus réceptif à la restriction d'un filtre nous vient de la manière même dont ils ont été conçus, dès le départ. Les moteurs à combustion interne sont des dérivés des moteurs à vapeur. De cela, le premier réflexe, puisque la vapeur n'était pas polluante, de ne pas se préoccuper de l'échappement. Le second réflexe de base, aussi spontané dans la conception de ces moteurs est que, pour qu'ils fonctionnent, ils doivent être alimentés, et que des gaz doivent d'abord et avant tout y être introduits. Cette conception a semblé bénéficier d'une évidence presque absolue. Si en effet, le moteur n'est pas alimenté, il ne fonctionnera pas. De là l'idée que l'échappement des gaz usés n'est qu'une conséquence de l'apport et du brûlement de ces gaz. En effet, cette manière de penser, qui considère l'échappement comme une résultante, est à l'origine du fait que l'échappement de ces moteurs est non seulement secondaire mais déficient. Tous les filtres ou catalyseurs doivent donc être conçue de manière à ne pas augmenter la restriction de sortie des gaz usés du moteur. Cette manière rend tous les filtres et catalyseurs limités dans leur capacité de filtration, ce qui conserve les moteurs très polluants.

Le document US-A-4, 185,597 décrit un moteur à combustion interne basé sur un système à piston double, dans lequel une surcompression est obtenue à partir du dessous du piston supérieur et du dessus du piston inférieur, ou, selon le cas, à partir seulement du dessus du piston inférieur, des valves agencées axialement, ou étant de type soupapes flexibles orientées, permettant le contrôle du flux d'air pour la surcompression, le mélange combustible étant formé entre la zon de surcompression et la chambre de combustion.

La présente invention selon la revendication 1 a d'abord pour but de montrer que si une telle conception est logique au niveau du brûlement des gaz, elle ne l'est pas nécessairement au point de vue mécanique, au niveau fluide. La présente solution technique a pour but de montrer que, quoiqu'il soit vrai que les moteurs doivent être alimentés, cela n'implique pas que cela doive nécessairement être la première phase du moteur.

La présente solution technique propose en tout premier lieu une conception différente de la circulation des gaz et par conséquent de l'alimentation du moteur. En effet, contrairement à la tradition, la présente solution technique vise en tout premier lieu, comme si c'était le premier temps du moteur, la sortie des gaz usés, lorsque le moteur est en marche. Notre conception va même plus loin puisqu'elle considère l'admission des gaz neufs, non plus comme la cause, mais comme le résultat, comme la conséquence, comme l'effet, de l'évacuation des gaz usés. Dès lors cette solution permettra, puisqu'elle privilégie d'abord l'évacuation totale des gaz, un haut taux de restriction et par conséquent un haut taux de filtration.

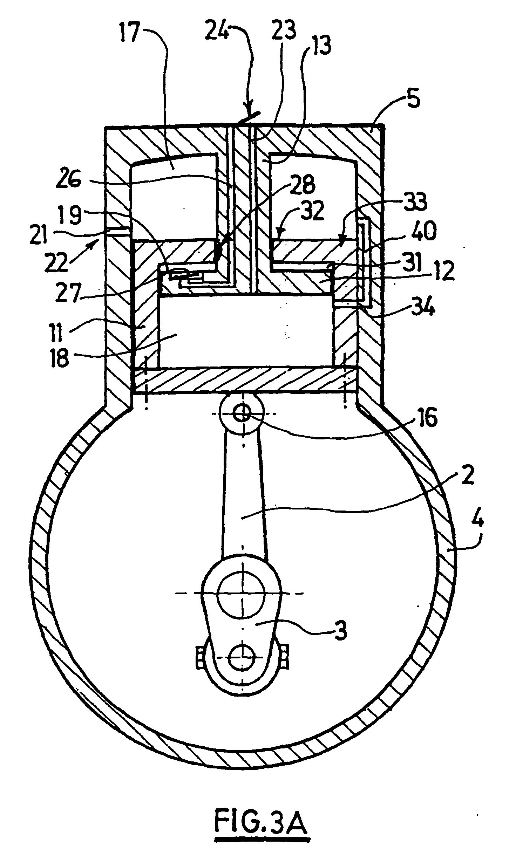

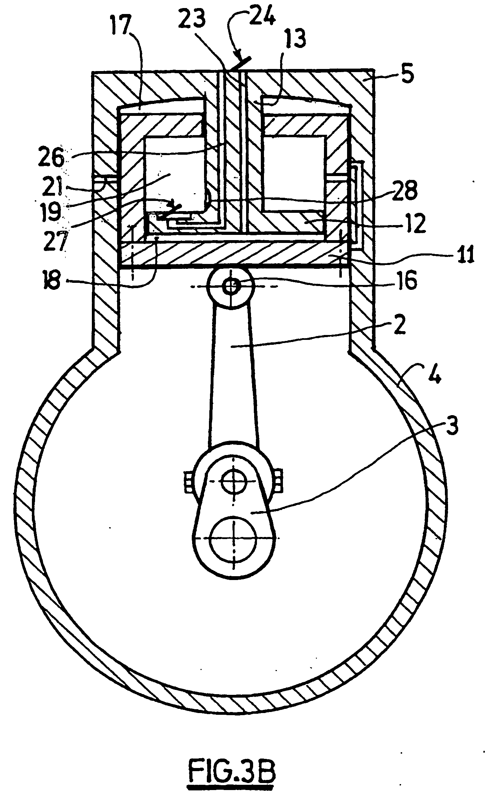

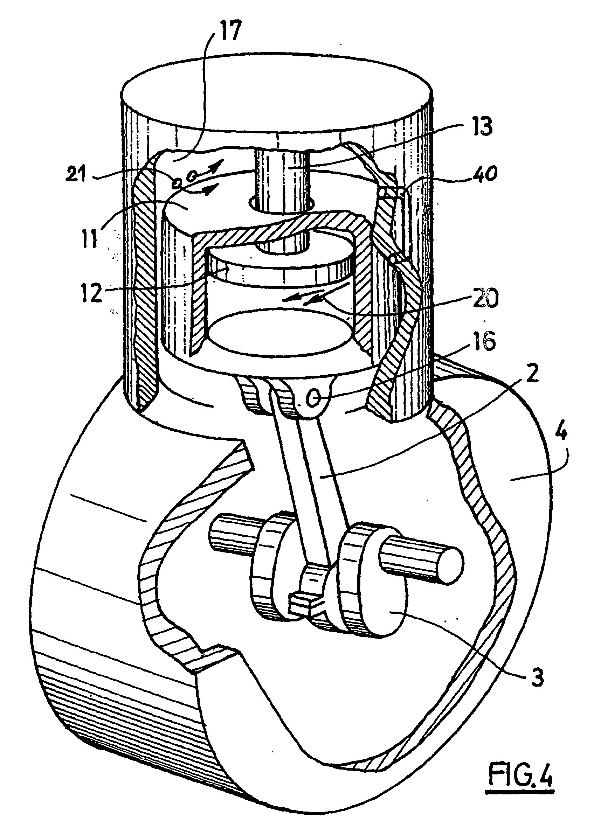

Une première réalisation de l'invention est obtenue (Figures 3A, 3B et 4) par l'utilisation d'un piston subsidiaire fixe que nous nommerons contre-piston 12. Le contre-piston 12 est disposé dans le cylindre 5 et est relié au haut du cylindre 5 par un manchon que nous nommerons manchon du contre-piston 13.

Un piston dont l'intérieur est creusé de façon cylindrique, c'est pourquoi nous le nommerons piston-cylindre 11, est inséré dans le cylindre principal 17 du moteur de telle sorte que le contre-piston 12 se trouve en son intérieur. Bien entendu, le montage devra prévoir un piston-cylindre en deux pièces, par la suite reliées l'une à l'autre de façon fixe après l'insertion du contre-piston 12. La partie inférieure du piston-cylindre 11 sera reliée à un moyen tel une bielle 2 qui à son tour, sera reliée au maneton du vilebrequin 3.

Cet assemblage de pièces nous permettra de distinguer trois types de chambres. Tout d'abord une chambre 17, se situant entre la tête du piston-cylindre 11 et la tête du cylindre que nous nommerons cylindre principal par opposition au cylindre du piston-cylindre 11. Une deuxième chambre 18, se situant entre la partie inférieure du contre-piston 12 et la partie inférieure du piston-cylindre 11, sera nommée préchambre d'échappement ou chambre d'admission des gaz usés. Enfin, une troisième chambre 19, située entre la partie supérieure du contre-piston 12 et la partie supérieure du piston-cylindre 11, sera nommée préchambre d'admission des substances neuves.

Nous pouvons maintenant aborder le fonctionnement spécifique de ce moteur. Le premier temps de celui-ci pourrait à juste titre être considéré comme celui de l'échappement des gaz. Cet échappement, comme nous le verrons, sera total et pourra par conséquent accepter le maximum de restriction et par conséquent de filtration (Figures 3A, 3B et 4). En effet, lors de la remontée du piston-cylindre 11 dans le cylindre principal 17, l'on s'aperçoit que la chambre de pré-échappement 18 s'est réduite à zéro, ce qui force l'évacuation totale des gaz usés. Cette évacuation totale agissant comme une pompe résiste donc très bien à une restriction du moteur occasionnée par le filtrage des gaz.

Lors de la redescente du piston-cylindre 11, la préchambre d'échappement 18 se sera agrandie, la valve d'échappement se sera fermée et tous les orifices seront en phase d'occlusion. Il se crée alors un vide dans cette chambre 18. Au moment de son arrivée à son plus bas niveau, le contre-piston 12 et le piston-cylindre 11 dégageront les orifices du conduit d'admission 40 des gaz usés. Les gaz usés seront alors aspirés au travers du conduit d'admission 40 des gaz usés vers la pré-chambre d'échappement 18. C'est donc par succion que les gaz usés pénètrent dans la préchambre d'échappement 18, cette dernière étant, par opposition aux moteurs conventionnels, dans sa phase la plus dilatée simultanément à la phase la plus dilatée du cylindre principal 17.

De l'autre côté du cylindre principal 17 sera disposé un conduit d'admission 21 des gaz neufs, auquel sera raccordé un carburateur. Ainsi donc, la succion des gaz brûlés dans la préchambre d'échappement 18 entraînera celle des gaz neufs (voir flèche 22) dans le cylindre principal 17. Les gaz neufs seront donc eux aussi admis par succion dans le cylindre principal 17. C'est ce qui nous fait dire que dans le présent moteur, le temps d'admission des gaz est subséquent et conséquent à celui de leur rejet.

Dès lors, le piston-cylindre 11 remonte à nouveau, et comme il y a eu des gaz neufs d'admis, l'on peut parler, lorsque le piston-cylindre 11 se retrouve totalement en haut, de compression et d'explosion des gaz, pendant que simultanément, à partir de la préchambre d'échappement 18 a lieu à nouveau un échappement sous pression et total.

Il nous reste maintenant à commenter les fonctions qui peuvent être attribuées à la troisième chambre, à savoir la chambre de pré-admission 19 des substances neuves. Trois fonctions principales peuvent lui être attribuées.

Premièrement, cette chambre 19 peut servir de moyen subsidiaire d'alimentation en gaz neufs, par un conduit d'admission 26 disposé dans le manchon 13 du contre-piston 12, de même que par une valve d'anti-retour 27 disposée sur la face supérieure du contre-piston 12. L'expansion de cette chambre 19 succionnera les gaz neufs lors de la remontée du piston-cylindre 11, et étant comprimés, lors de sa redescente, ils pourront être injectés complémentairement dans le cylindre principal 17 par des encavures disposées dans la partie inférieure 28 du manchon 13 du contre-piston 12. Cette poussée des gaz neufs se fera de façon complémentaire à son aspiration. Bien entendu, dans cette version, le carburateur sera relié au conduit d'admission 26 de la chambre de pré-admission 19.

Une deuxième fonction peut être dévolue à la chambre de pré-admission 19. En effet, on peut choisir de continuer d'alimenter le moteur en gaz à partir des orifices 21 déjà commentés, dans le côté du cylindre principal 17, et de plutôt admettre dans la chambre de pré-admission 19 tout simplement de l'air, cet air pouvant réaliser diverses fonctions.

Il peut par exemple être injecté dans le moteur juste entre les gaz usés et les gaz neufs, comme pour former un coussin d'air entre ceux-ci, assurant la propreté des gaz neufs. Nous parlerons alors de moteur à trois temps.

L'on peut d'une autre manière choisir de se servir de la préchambre d'admission 19 comme pompe à air servant de système de refroidissement du cylindre 17 et du bloc moteur. Dans cette dernière version, la sortie des gaz réchauffés peut se faire en entrée au carburateur. Toutes ces fonctions peuvent d'ailleurs être calibrées et ainsi être utilisées de façon mixte, la préchambre d'admission 19 servant à la fois d'alimentation du coussin d'air, de ventilation du moteur, et de pompage dans le carburateur.

Il est à noter qu'en plus donc de donner une possibilité de filtrage supérieur, ces types de moteurs permettent des alimentations de type deux temps mais seulement en gaz, ce qui ajoute à l'économie d'énergie.

Au surplus, ces types de moteurs à échappement total peuvent être mixés à des admissions conventionnelles.

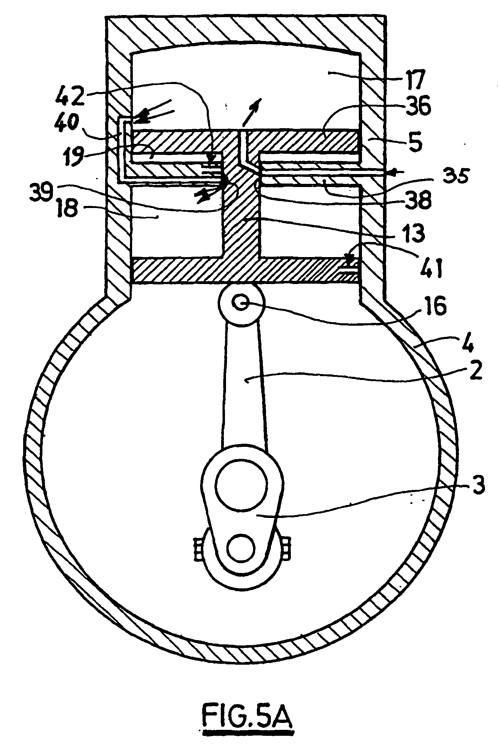

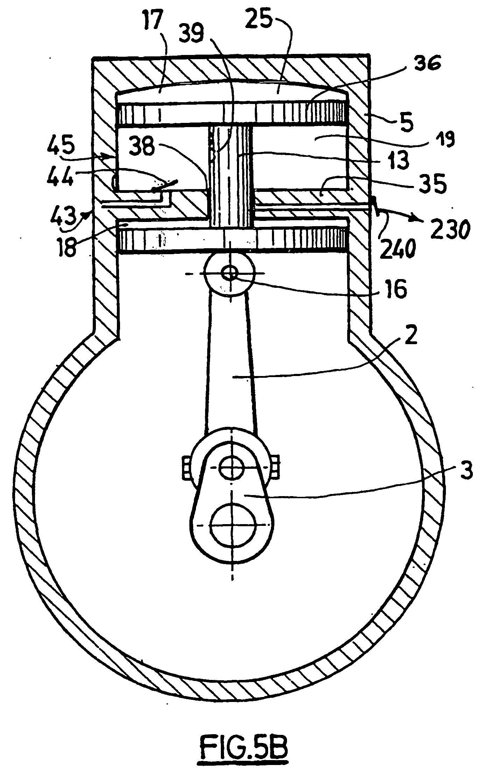

Une deuxième réalisation de l'invention possède des propriétés similaires à la précédente, et sera obtenue par l'utilisation d'un piston dont la forme, si l'on en effectue une coupe transversale, est celle d'un H, d'où le nom de piston en H 36. Ce piston en H 36, que l'on glissera dans le cylindre principal 17, sera simultanément marié à un contre- cylindre 35 (Figures 5A et 5B).

En effet, un piston 36 dont la forme latérale rappelle celle d'un H est inséré dans le cylindre principal 17, de telle sorte que chaque côté de ce H se retrouve de part et d'autre d'une paroi rigidement fixée dans le cylindre principal 17 et que nous nommerons contre-cylindre 35. Ce contre-cylindre 35 est perforé dans son centre et permet l'intrusion et le glissement de la partie rétrécie constituant le manchon central 13 du piston en H 36.

Le piston en H 36 sera relié à sa base à une bielle 2 qui à sa seconde extrémité, sera reliée au maneton du vilebrequin 3.

Dans la même optique que dans la réalisation précédente, cette configuration permet d'établir trois chambres distinctes, soit le cylindre principal 17, la préchambre d'échappement 18 et la préchambre d'admission 19.

Comme dans la configuration précédente, puisque les gaz sont admis par succion, le premier temps de ce moteur sera celui de l'échappement.

A la figure 5B la préchambre d'échappement 18 est réduite à zéro. Les gaz usés sont éjectés par un conduit d'échappement en 230, en passant par la valve d'échappement anti-retour 240, et ils atteignent un filtre. Cette manière de pourvoir à l'échappement peut accepter une haute restriction produite par un haut filtrage.

Le piston en H 36 redescendra ensuite et la valve d'échappement 240 se refermera automatiquement. Cette descente provoquera un vide dans la préchambre d'échappement 18. Au niveau le plus bas de la descente du piston en H 36 (figure 5A), un conduit 40 parcourant la paroi du contre-cylindre 35 permettra que les gaz compris dans la chambre du cylindre principal 17 soient succionnés par la préchambre d'échappement ou chambre d'admission 18 des gaz usés. Des conduits disposés dans la partie inverse du cylindre principal 17, reliés au système de carburation, permettra aux gaz neufs d'être succionnés dans le cylindre principal 17 par le vidage des gaz usés, vers la pré-chambre d'échappement 18.

La remontée subséquente du piston en H 36 re-compressera les gaz neufs, de même que les gaz usés se trouvant dans la préchambre d'échappement 18. A la fin de cette montée, les gaz seront explosés dans le cylindre principal 17 alors que les gaz usés seront à nouveau éjectés à cent pour cent vers la filtration.

Comme dans la réalisation précédente, des fonctions différentes peuvent être attribuées à la chambre de pré-admission des substances neuves 19. Ce peut premièrement être elle qui complète l'admission. En effet, un conduit 43 auquel sera relié le carburateur pourra être disposé dans la parois du contre-cylindre 35, et une valve anti-retour 44 pourra être disposée à la sortie de ce conduit 43, sur la surface extérieure et supérieure de la paroi du contre-cylindre 35. Les gaz seront alors à la fois poussés et succionnés dans le cylindre 17.

Une configuration différente permettra d'intégrer dans la préchambre d'admission de l'air qui sera injecté entre les gaz usés et l'admission des gaz neufs. Une autre configuration permettra de se servir de la chambre de pré-admission comme pompe à air servant au refroidissement des gaz. Enfin, une solution mixte peut être utilisée, en injectant une partie des gaz réchauffés dans le carburateur, et une autre en coussin.

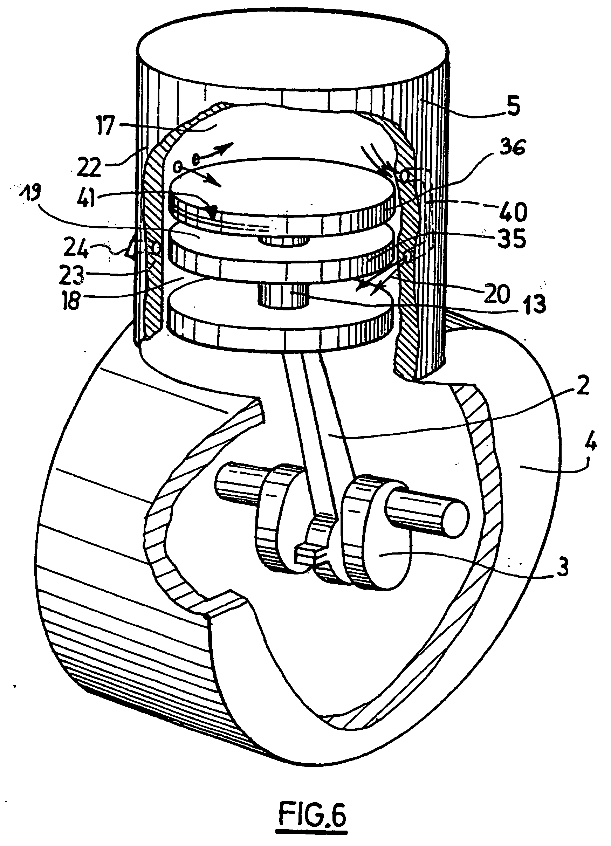

Une réalisation simplifiée de la présente invention nécessitera deux systèmes de cylindre 17, contre-cylindre 35 et piston en T 47 (Figures 6 à 8).

Dans cette configuration, le piston en T 47 est inséré dans le cylindre principal 17, et son manchon 13 sera inséré dans le passage de la paroi qui constitue le contre-cylindre 35. L'extrémité de ce manchon 13 sera reliée à un moyen tel une bielle 2 qui à son tour, sera reliée au maneton du vilebrequin 3.

Cette configuration a pour effet de produire deux chambres différentes, l'une du cylindre principal 17 et l'autre de pré-échappement 18, la première se situant entre la tête du piston 47 et le cylindre principal 17, et la seconde entre la paroi supérieure du contre-cylindre 35 et la surface interne du piston en T 47.

Dans cette configuration, deux systèmes sont nécessaires puisque la dilatation d'une préchambre d'échappement doit être couplée au cylindre du système complémentaire de manière à en aspirer les gaz usés lorsque le piston en T en sera au plus bas, aspirant ainsi les gaz neufs. Simultanément, le système en phase d'échappement explose dans sa partie supérieure, alors que le système en phase d'admission des gaz expulse ses gaz dans la partie inférieure de son système.

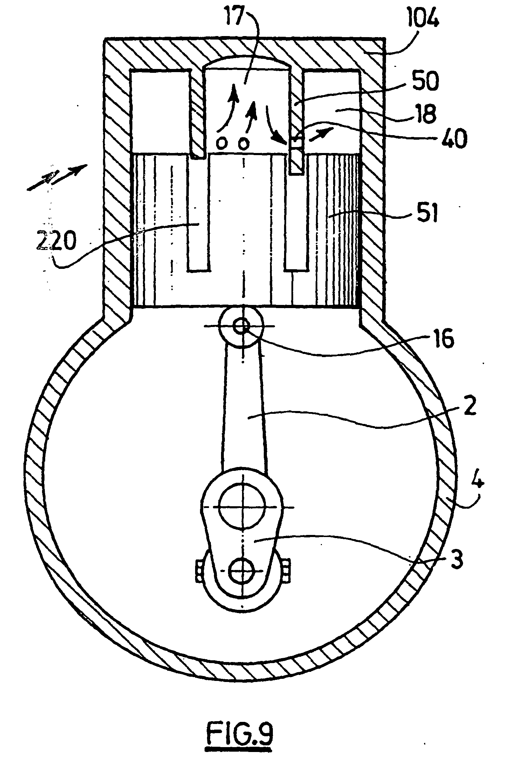

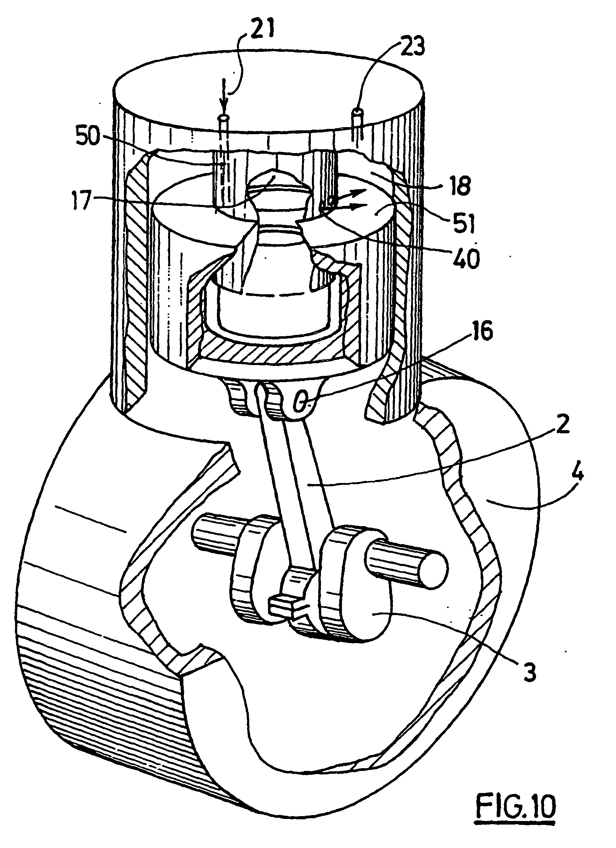

Une autre réalisation de la présente invention (Figures 9 et 10) propose, pour arriver à des résultats similaires, l'utilisation d'un piston en W 51, qui sera couplé à un poly-cylindre 104. Un piston en W, c'est-à-dire un piston muni d'un creuset circulaire apte à recevoir le cylindre intérieur 50 des poly-cylindres 104, sera, à son extrémité supérieure à la fois imbriqué dans le cylindre principal 17 et le cylindre secondaire 50, et verra son extrémité inférieure rattachée au vilebrequin 3 par un moyen tel qu'une bielle 2. Nous appellerons la chambre située entre la surface de la partie en forme de peigne du piston en W et le cylindre secondaire, la préchambre d'échappement 18. Dans cette configuration l'on constatera que, lorsque le piston en W est à sa phase la plus basse, la préchambre d'échappement 18 est en état de vide. Un orifice 40 se trouvant entre le cylindre principal 17 et la préchambre d'échappement 18 permettra la succion des gaz usés. A son tour, le chassement des gaz bruts aspirera les gaz neufs de l'extérieur dans le cylindre principal 17. Lorsque le piston en W remontera, les gaz compris dans le cylindre principal 17 seront enflamés. Comme le haut du cylindre secondaire sera plus bas, les gaz compris dans le cylindre secondaire seront totalement évacués et le moteur sera capable d'accepter un haut taux de restriction, donc de filtrage.

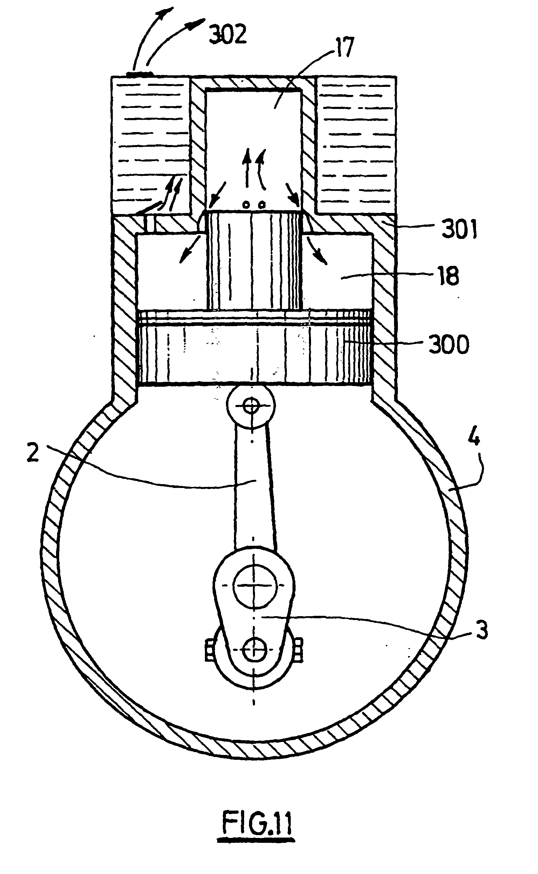

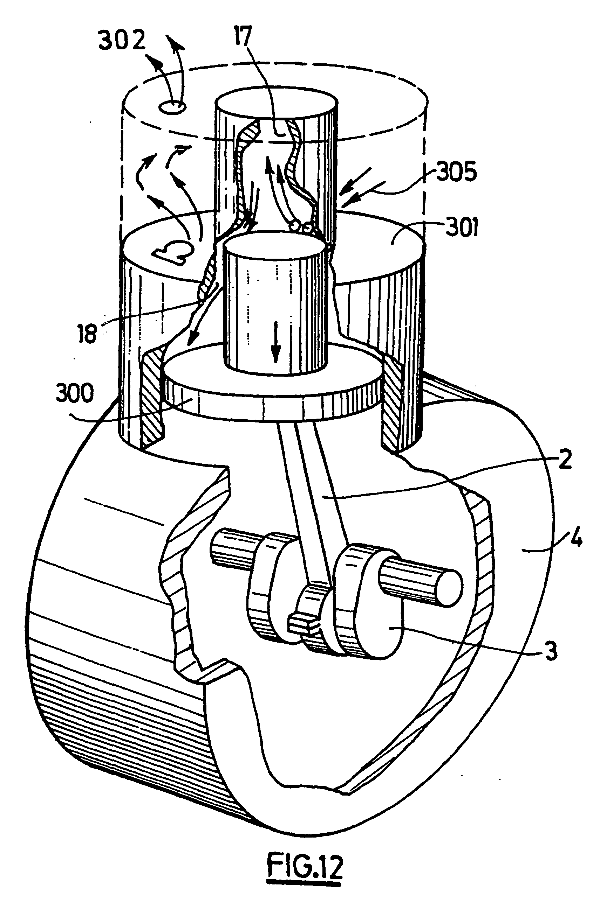

La solution technique suivante (Figures 11 et 12) est une réalisation similaire aux précédentes, mais dont le piston a la forme d'un T renversé.

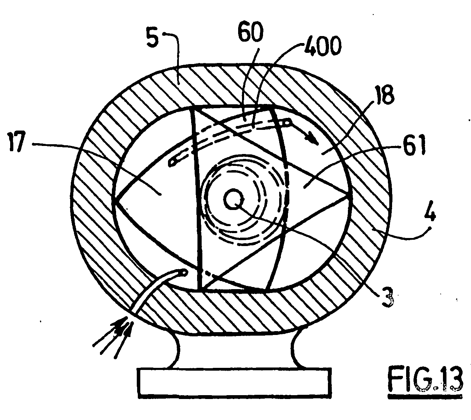

On peut aussi noter une adaptation de la présente conception des moteurs aux moteurs de type rotatif (Figure 13). En effet, l'on peut supposer un piston en triangle 60 plus bombé et apte à éjecter les gaz à cent pour cent, et ainsi, apte à succionner de nouveaux gaz usés, et de cause à effet, impliquer le remplissage du cylindre principal 17 avec de nouveaux gaz neufs.

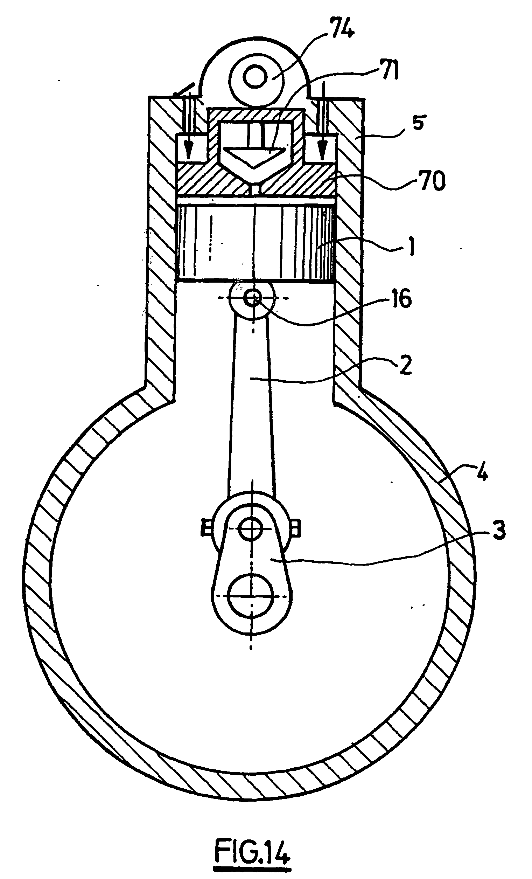

La réalisation suivante (Figure 14) peut s'appliquer dans la mesure où il y a nécessité de conserver un système de moteur à quatre temps. En ce cas, l'on peut supposer l'utilisation d'un contre-piston 70 actif à titre de valve d'échappement. Ce piston secondaire 70 viendrait, lors de l'échappement, s'approcher du piston principal 1 de manière à réduire la chambre d'échappement 18 à zéro. Cette manière de faire sera capable d'accepter un haut niveau de résistance. Une dernière solution, plutôt mécanique, vise à faire monter, lors de l'échappement, le piston principal plus haut que lors de la phase explosive, et cela suffisamment pour réduire la compression possible des gaz à zéro.

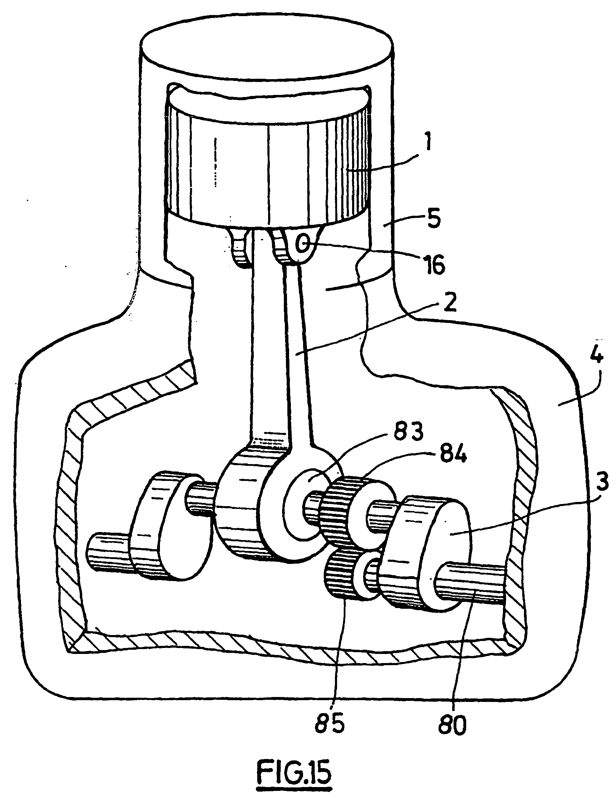

Pour arriver à cette mécanique (Figure 15), il faut relier l'extrémité inférieure de la bielle 2 à une came 83 disposée rotativement autour du maneton du vilebrequin. A cette came 83 est joint rigidement un engrenage 84, cet engrenage 84 étant couplé à un engrenage fixe 85, fixé à un manchon 80 traversant le vilebrequin et étant relié rigidement au corps du moteur.

### Description sommaire des figures

La figure 1 est une coupe transversale d'un moteur conventionnel de type deux temps. Les gaz sont injectés depuis la base du moteur sous pression dans le cylindre.
La figure 2 représente la position du piston lors de l'échappement maximal d'un moteur conventionnel à quatre temps.
Les Figures 3A et 3B représentent une coupe transversale d'un moteur énergétique anti-refoulement selon la présente invention. On y aperçoit le cylindre principal 17, le piston-cylindre 11, le contre-piston 12, dont l'assemblage détermine la chambre du cylindre principal 17, la préchambre d'échappement 18, et la préchambre d'admission des substances neuves 19. En figure 3B, le moteur est dans sa phase d'expulsion des gaz usés, premier temps du présent type de moteur, alors qu'en figure 3A, les pièces ont été placées dans la phase d'admission des substances usées et neuves.
La figure 4 est une vue en trois dimensions de la réalisation précédente.
Les Figures 5A et 5B représentent une coupe transversale d'une réalisation différente de la présente invention. Ici, le piston est plutôt en forme de H, et avec le cylindre 5 et le contre-cylindre 35, il délimite trois chambres, soit le cylindre principal 17, la préchambre d'échappement ou chambre d'admission des gaz usés 18, et la chambre de pré-admission des substances neuves 19. En figure 5B, le piston est à son niveau le plus haut, et la préchambre d'échappement 18 étant comprimée, le moteur se trouve dans sa phase d'échappement, alors qu'en figure 5A les pièces ont été placées en phase d'admission des gaz usés et neufs.
La figure 6 est une configuration similaire aux précédentes, mais dont les pièces ont été illustrées en trois dimensions.
La figure 7 est une coupe schématique d'un moteur comprenant en composition deux systèmes complémentaires de moteur de piston en T, dont la préchambre d'échappement de l'un devient la pompe de succion des gaz usés de l'autre, et vice versa.
La figure 8 est une vue en trois dimensions de la réalisation précédente.
La figure 9 montre une réalisation de l'invention utilisant un piston en forme de W, inséré dans un poly-cylindre. On y voit les gaz usés être transférés du cylindre principal vers les préchambres d'échappement, et par là aspirer des gaz neufs.
La figure 10 est une vue en trois dimensions de la réalisation précédente.
La figure 11 montre une version simplifiée de l'invention réalisée par l'utilisation d'un piston en forme de T renversé. Ici, la partie large du piston est insérée dans la partie la plus large du cylindre, de même que la partie rétrécie est insérée dans la partie la plus rétrécie du cylindre. L'on s'aperçoit dès lors que, lorsque le piston est, comme ici, dans sa position la plus basse, les gaz sont aspirés du cylindre principal à la chambre d'admission des gaz usés, ce qui implique l'admission des gaz neufs dans le cylindre principal.
La figure 12 est une vue en trois dimensions de la réalisation précédente.
La figure 13 montre la réalisation d'un moteur anti-refoulement de type rotatif. L'une des deux pales, la plus bombée, éjecte les vieux gaz et aspire de nouveaux gaz usés. Ces actions ont pour effet d'introduire des gaz neufs dans le cylindre principal. L'on doit noter que la pale dévolue aux gaz usés pourrait être remplacée par un système à piston.
La figure 14 montre un moteur à quatre temps dont l'échappement total sera obtenu par une valve-piston, celle-ci comblant l'écart restant en fin de course du piston.
La figure 15 montre un moteur dans lequel est disposé rotativement un vilebrequin. Sur le maneton de celui-ci est montée une came munie d'un engrenage imbriqué à un autre engrenage disposé sur un axe transversal traversant sur sa longueur et se rattachant rigidement au corps du moteur. La bielle et le piston étant rattachés et donc soumis à l'action de cette came, seront, à raison d'un tour sur deux, à savoir lors de l'échappement, surélevés de manière à refermer de façon totale les chambres d'échappement.

### Description détaillée des figures

La figure 1 est une reproduction d'un moteur conventionnel à deux temps. Dans le présent cas, les pièces ont été placées en phase d'admission des gaz en 20a (flèche 9) . On y aperçoit un piston 1 relié à une bielle 2, cette dernière étant reliée rotativement à un vilebrequin 3. Le tout est inséré dans un bloc moteur 4, auquel est rattaché rigidement un cylindre 5. L'entrée du gaz dans la base du moteur est contrôlée par une valve 7 et un carburateur 6.

A l'ouverture des conduits d'alimentation, les gaz neufs sont à leur état maximal de basse compression, et la basse chambre formée par le bloc moteur 4 est à sa dimension la plus restreinte. Par conséquent, ils seront injectés par poussée dans le cylindre 17 en expulsant par voie de conséquence les gaz usés (voir flèches 100).

La chambre du cylindre étant alors dans sa phase la plus agrandie, il va sans dire qu'un blocage ou une restriction de la sortie provoquerait automatiquement la compression plutôt que l'évacuation des gaz usés, ce qui rendrait le brûlage subséquent impossible. Toute utilisation des filtres à gaz ayant une action restrictive sera donc inapplicable.

La figure 2 représente un moteur conventionnel à quatre temps dans sa phase d'évacuation. On y aperçoit le piston 1, la bielle 2, le vilebrequin 3, le tout monté dans un bloc moteur 4 et un cylindre 5. Comme le mouvement de ces pièces est le même lors de la compression explosion que lors de l'échappement, il ressort que les espaces libres 10 se situant au-dessus du piston 1 seront l'équivalent des chambres de combustion, et que par conséquent, si l'on empêche ou que l'on restrictionne les voies d'échappement des gaz, une compression indue des gaz usés, qui ainsi demeureront dans le cylindre 5, empêchera par la suite une alimentation normale du moteur. Le moteur sera alors asphyxié et s'étouffera dans ses vieux gaz. Pour ces raisons, comme dans le premier cas, ce moteur n'accepte pas de filtres restrictifs. De même en est-il des moteurs rotatifs, qu'ils soient à deux ou à quatre temps.

Les figures 3A et 3B représentent les deux principaux temps dans un moteur énergétique anti-refoulement selon l'invention, à savoir la phase d'admission des gaz usés, et celle de l'expulsion totale des ces gaz usés. Ici, les pièces ont été placées dans ce que nous considérons comme les deux principaux temps du moteur, à savoir celui de l'admission des gaz usés dans la préchambre d'échappement 18, et celui de l'expulsion totale des gaz usés. Dans ce type de moteur, l'on retrouvera tout d'abord un bloc moteur 4, dans lequel est monté rotativement un vilebrequin 3. A ce bloc est fixé un cylindre 5 dans lequel sera inséré un type différent de piston que nous nommerons piston-cylindre 11. Un nouvel élément de type piston, que nous nommerons contre-piston 12 sera relié rigidement à un manchon 13, ce dernier étant lui-même à son extrémité contraire rattaché de façon fixe à la tête du cylindre 5. Le piston-cylindre 11, appelé ainsi parce qu'il est muni d'un cylindre intérieur, sera à la fois inséré dans le cylindre principal 5, et couplé au contre-piston 12 de manière à ce que ce dernier soit inséré dans son propre cylindre intérieur. Bien entendu, dans la pratique, le piston-cylindre 11 devra être construit en deux morceaux, pour pouvoir y introduire le contre-piston 12 et ensuite refermer les préchambres d'échappement ou chambres d'admission des gaz usés 18.

Le piston-cylindre 11, dans sa partie inférieure, sera relié indirectement au maneton d'un vilebrequin 3 par un moyen tel qu'une bielle 2. L'on s'aperçoit que l'agencement de ces pièces crée trois chambres différentes que nous nommerons cylindre principal 17, préchambre d'échappement 18, et chambre de pré-admission des substances neuves 19.

Les pièces précitées fonctionneront de la façon suivante.

A la présente étape (figure 3A), un vide limite s'est créé entre les parties inférieures du contre-piston 12 et du piston-cylindre 11, dans ce que nous nommons la préchambre d'échappement 18. A ce moment, le piston 11 se trouve à un point précis où des orifices le traversant se joignent à des conduits 40, situés dans le cylindre 5, et dont la deuxième embouchure sera juste au-dessus du piston-cylindre 11. Nous nommerons ces conduits, conduits d'admission des gaz brûlés 40. A cette étape, comme le piston-cylindre 11 et le contre-piston 12 dégagent simultanément les entrées, et comme la préchambre d'échappement 18 est en état de dépression maximale, les gaz se trouvant dans le cylindre principal 17 seront succionnés dans la préchambre d'échappement 18. On voit donc que contrairement aux moteurs conventionnels, les chambres dont il est question, à savoir la chambre d'admission 18 des gaz brûlés et celle du cylindre 17 doivent se trouver simultanément dans leur phase d'expansion maximale. L'on voit aussi que l'admission des gaz neufs est une conséquence et non une cause. En effet, du côté opposé du cylindre principal 17 seront disposés des conduits le traversant, que nous nommerons conduits d'admission des gaz neufs 21, qui seront reliés au carburateur 6.

La succion des gaz usés vers la chambre de pré-échappement ou chambre d'admission des vieux gaz 18 provoquera l'aspiration des gaz neufs dans le cylindre principal (voir flèche 22).

Lors de sa remontée, le piston-cylindre 11 ferme les orifices des conduits d'admission 21 des gaz usés et neufs. Une pression se formera dans la préchambre d'échappement 18.

Cette pression poussera totalement les gaz dans le conduit d'échappement 23 situé dans le manchon 13 du contre-piston 12, et ouvrira la valve d'échappement anti-retour 24.

Ces gaz, ainsi forcés à la manière d'une pompe vers l'extérieur sans lien direct avec l'alimentation du moteur, pourront par conséquent accepter un haut niveau de restriction, et donc, être filtrés avec des filtres haute restriction, donc très anti-polluants. De plus, l'explosion étant sans contact avec l'extérieur, on pourra soustraire à ces dits moteurs la nécessité d'un pot d'échappement. On doit au surplus noter que cette conception réalise des moteurs deux temps seulement au gaz, ce qui diminue d'autant plus l'aspect polluant des moteurs tout en augmentant son efficacité.

Pendant cette évacuation totale des gaz, du côté du cylindre principal 17, l'on s'apercevra que les gaz s'y trouvant sont en état de compression, donc le moteur est aussi en phase d'explosion conventionnelle.

Nous pouvons maintenant regarder de plus près quelles fonctions peuvent être attribuées aux chambres de pré-admission des substances neuves 19, ces chambres qui se situent entre la partie supérieure du cylindre du piston-cylindre 11 et la partie supérieure du contre-piston 12.

Trois fonctions principales peuvent leur être attribuées. Premièrement elles peuvent agir de façon complémentaire à l'admission des gaz neufs. En effet, les gaz peuvent passer à travers un conduit d'admission des substances neuves 26 traversant le manchon 13 du contre-piston 12 et aboutissant à une valve anti-retour 27 disposée sur la face supérieure du contre-piston 12. Nous appellerons ces éléments conduits d'alimentation et valve d'alimentation de substances neuves. Lors de la remontée du piston-cylindre 11, la chambre de pré-admission 19 s'agrandira faisant s'ouvrir la valve d'admission, et des gaz neufs y seront succionnés. A la redescente complète du piston-cylindre 11, un moyen, comme par exemple des encavures, demi-lunes dans le bas du manchon du contre-piston 12, permettront aux gaz se trouvant dans la chambre de pré-admission 19 d'être propulsés dans le cylindre principal 17, en remplacement des gaz usés succionnés par la préchambre d'échappement 18 . Il pourrait s'agir de gaz neufs, cette méthode d'admission remplaçant la première et complétant la succion dont nous avons parlé.

Une autre manière d'utiliser les préchambres d'admission est de plutôt leur faire intégrer de l'air. Cette manière de faire permettra de projeter dans le cylindre entre les gaz neufs et usés un coussin d'air les séparant, assurant à la fois la propreté des gaz neufs et une complète évacuation des gaz usés. On réalisera de cette façon ce que l'on pourrait nommer un moteur à trois temps.

D'une autre manière encore, l'on peut utiliser la fonction de pompage des préchambres d'admission de manière à propulser de l'air frais dans les parois des carcasses du cylindre et du bloc moteur, et cela, dans le but de créer un système de refroidissement du moteur par l'air.

On doit noter qu'un mixte de ces solutions d'utilisation des préchambres d'admission peut être produit en propulsant l'air chaud ayant transité dans les parois du moteur dans le système de carburateur, se réservant une partie de cet air pour agir à titre de coussin d'air.

Avant de passer à la figure suivante, disons sommairement quelques mots en ce qui a trait à la segmentation de ce type de moteur.

Premièrement, des segments seront nécessaires sur la surface extérieure du rebord 31 du contre-piston 11. Des segments seront aussi nécessaires à l'intérieur et à l'extérieur 33 du piston-cylindre 11. En effet, tout d'abord à l'intérieur, des segments seront préférablement disposés en 32 entre le piston-cylindre 11 et le manchon 13 du contre-piston 12, de manière à bien isoler le cylindre principal des chambres de pré-admission 18. Quant à l'extérieur, des segments devront être disposés dans le haut et dans le bas du piston-cylindre 11.

Dernièrement, un petit segment circulaire 34 pourra aussi être installé à l'orifice inférieur du conduit d'échappement des gaz usés, de telle sorte qu'à la remontée, les conduits d'échappement et d'admission ne communiquent pas par le pourtour du piston-cylindre 11. De plus, il est à noter que le conduit d'échappement ne doit pas être dans le sens exact du déplacement du piston-cylindre 11, afin que son orifice supérieur ne se retrouve pas face à celui du piston-cylindre 11. En effet, dans la partie haute de sa course, le conduit d'admission des gaz usés du piston lui-même doit demeurer en état d'occlusion.

La figure 4 représente une vue en trois dimensions d'une réalisation telle que décrite à la figure précédente. On y retrouve les principaux éléments, soit le bloc moteur 4, le cylindre du moteur 5, le vilebrequin 3, la bielle 2, le contre-piston 12 et son manchon 13, le piston-cylindre 11, le conduit 40 d'admission des gaz usés, celui 21 d'admission de l'air, celui d'échappement n'étant pas visible. On y retrouve aussi les principaux segments du contre-piston 12, du cylindre interne 17, et du piston-cylindre 11.

Ici, le moteur a été illustré en phase d'admission des gaz usés (voir flèches 20) et des gaz neufs, et ces derniers, simultanément à la succion des préchambres d'admission, recevront la pression de l'air réchauffé de la chambre d'admission de l'air ayant circulé dans tout le moteur.

Les figures 5A et 5B représentent une coupe transversale des deux temps principaux d'une réalisation différente de l'invention. Comme la première, cette réalisation réussit à chasser totalement les gaz usés du moteur en respectant un haut taux de restriction que peuvent offrir les filtres haute densité.

Dans cette réalisation, un vilebrequin 3 est disposé rotativement dans un bloc moteur 4. A ce bloc est rattaché rigidement un cylindre 5. Dans ce cylindre 5, que l'on nommera cylindre principal, est disposée transversalement une paroi 35, munie en son centre d'un passage 38 permettant le déplacement de la partie amincie 13 du piston en H 36.

Nous nommerons cette paroi contre-cylindre 35. En combinaison, et de telle sorte que chaque partie de son H se retrouve d'un côté différent du contre-cylindre 35, un piston 36 en H est inséré dans le cylindre principal 5, et a simultanément sa partie rétrécie du centre, le manchon 13 du piston 36, qui est insérée dans le passage central 38 du contre-cylindre 35. Nous disons piston en H parce qu'une coupe transversale d'un tel piston a la forme d'un H. La partie la plus basse de ce contre-piston 35 sera reliée indirectement au maneton du vilebrequin 3 par un moyen tel qu'une bielle 2.

Dans cette réalisation, l'on peut trouver trois chambres indépendantes, qui auront les mêmes propriétés et nomenclatures que dans la réalisation antérieure. Il s'agit des préchambres d'échappement ou chambres d'admission des gaz usés 18, du cylindre principal 17, et dernièrement des chambres de pré-admission des substances neuves 19. Pour ce qui est de la première 18, elle se situera entre la partie inférieure du piston H 36 et le côté inférieur de la paroi du contre-cylindre 35. La chambre 17 du cylindre principal, pour sa part, se situera entre la plus haute partie du piston 36 et le cylindre principal 5 lui-même. La chambre de pré-admission des gaz neufs 19, elle, se situera entre la partie supérieure du piston en H 36 et la partie supérieure de la paroi du contre-cylindre 35.

Comme dans le premier cas, lors de la descente au plus bas niveau du piston 36, la chambre de pré-admission des gaz usés 18 s'est agrandie à son maximum, créant un vide. Un moyen, comme par exemple une petite demi-lune, disposée dans le haut 39 de la partie manchon 13 du piston en H 36, annulera l'effet de la segmentation, et dès lors permettra aux gaz usés du cylindre principal d'être succionnés, sous l'effet de l'aspiration, dans la chambre de pré-échappement par les conduits d'admission des gaz usés 40 qui traversent dans la présente version la cloison du contre-cylindre 35.

Comme dans le premier cas, les gaz neufs remplaceront par succion les gaz usés.

En ce cas, ils seront intégrés par des conduits d'admission, disposés dans la paroi du cylindre principal 5, et reliés au système de carburation.

Lors de la remontée du piston, la préchambre d'échappement 18 et la chambre du cylindre principal 17 se réduiront. Les gaz usés seront donc totalement évacués, en acceptant la restriction d'un haut filtrage, alors que les gaz neufs compressés seront explosés.

Comme dans la première réalisation, des segments seront nécessaires à des endroits stratégiques, de manière à bien isoler les diverses chambres. Tout d'abord, au pourtour de chaque partie élargie du piston en H 36, agissant en appui sur le cylindre principal 5. Ensuite, à l'intérieur du passage central du contre-cylindre 35, en appui sur la partie amincie 42 du piston en H 36.

Toujours comme dans la première réalisation, la chambre de pré-admission des gaz neufs 19 peut être réalisée de diverses manières. Elle peut en premier lieu servir de système complémentaire d'admission des gaz neufs. En tel cas, un conduit reliant à l'extérieur le système de carburation au moteur, sera pratiqué dans la paroi du contre-cylindre 35, et sera terminé sur la partie supérieure du contre-cylindre 35 par une valve anti-retour 44. Sous l'effet de l'agrandissement de cette chambre, les gaz neufs seront réadmis dans le moteur. En se refermant, la chambre de pré-admission compressera ces gaz qui, par un moyen tel qu'une demi-lune pratiquée dans le cylindre principal pourront annuler l'effet de la segmentation et pénétrer dans le cylindre en agissant de façon complémentaire à la succion des gaz usés.

La préchambre d'admission 19 peut aussi servir de pompe à air, servant à intégrer un coussin d'air entre les gaz usés et neufs, ou encore comme pompe de refroidissement par l'air du cylindre et du bloc moteur. Enfin, tous ces effets peuvent être jumelés, en forçant l'air réchauffé du moteur à alimenter sous pression le système de carburation.

La figure 6 est une vision en trois dimensions de la précédente réalisation.

On y retrouve le bloc moteur 4, le cylindre 5, la bielle 2, le contre-cylindre 35, le piston en H 36, la chambre d'admission des gaz usés 18, du cylindre principal 17, de pré-admission des gaz neufs 19, les segments du contre-piston 35, du piston 36 , les conduite et valve d'échappement 24, les conduites et valves d'admission, et les conduites de circulation d'air.

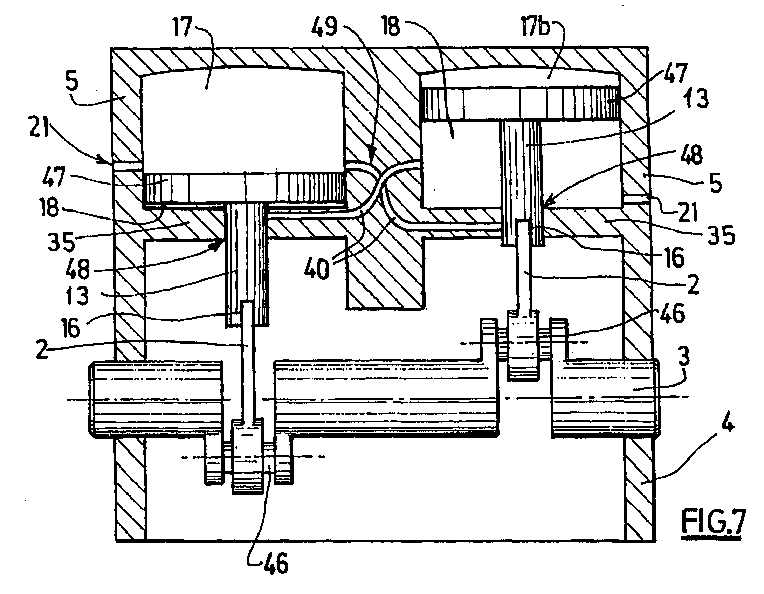

La figure 7 est une coupe transversale, pour deux temps principaux, d'une réalisation simplifiée des précédentes qui nécessite cependant deux systèmes de piston en T 47, couplés à un contre-cylindre 35.

Dans la présente réalisation, deux systèmes sont en effet nécessaires et réalisent simultanément les temps contraires du présent moteur. Dans cette réalisation, un vilebrequin 3 possédant deux manetons 46 dans des positions opposées, est disposé rotativement dans un bloc moteur 4. A ce bloc sont rattachés deux cylindres 5 dans lesquels sont disposés rigidement des contre-cylindres 35. Dans chaque cylindre 5 est inséré un piston 47 en T, dont le manchon 13 est inséré dans le passage interne 48 du contre-cylindre 35. Chacun de ces pistons 47 en T est relié indirectement, à son extrémité inférieure par un moyen tel qu'une bielle 2 à un maneton du vilebrequin 3.

Dans ce type d'arrangement, deux chambres sont créées, à savoir, celle du cylindre principal 17 et la chambre de pré-admission des gaz 18. Cette dernière chambre 18 se retrouve entre la partie inférieure du piston 47 en T et la paroi du contre-cylindre 35. Dans cette chambre 18, l'on peut décider de pré-admettre des gaz neufs, pour ensuite les envoyer dans le cylindre. Cette façon de faire permettra de produire un moteur deux temps seulement à gaz, ce qui est acquis, mais duquel l'on ne pourra pas contrôler la restriction de l'échappement.

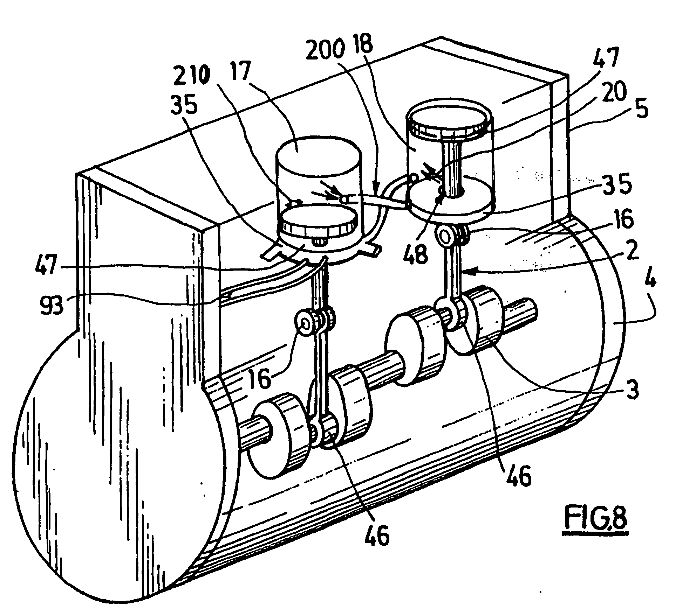

L'on peut cependant agir différemment si l'on fait intervenir simultanément les deux systèmes. En effet, en raccordant la préchambre d'admission 18 des gaz d'échappement d'un système au cylindre 5 du système complémentaire, l'on peut alors faire en sorte que le vide créé dans la chambre de pré-admission des gaz d'un système succionne les gaz usés du système complémentaire (voir les flèches en figure 8). Comme dans le cas précédent, des conduits disposés dans la paroi du cylindre et connectés à un système de carburation permettront de remplacer, par effet de succion dans le système complémentaire, les gaz bruts par des gaz neufs. Un demi-tour plus loin, c'est la situation contraire qui adviendra puisque ce sera la chambre de pré-admission des gaz du deuxième système qui alimentera le système principal. Pour les mêmes raisons que précédemment, ce moteur acceptera un haut niveau de restriction occasionné par les filtres, ne nécessitera plus de pot d'échappement, et n'aura que deux temps, soit, succion-succion, et compression-compression.

La figure 8 représente une coupe en trois dimensions de la réalisation précédente. On y retrouve le bloc moteur 4, le vilebrequin 3, les deux cylindres 5 et contre-cylindres 35, les deux pistons en T 47, de même que les conduits d'admission des gaz usés 200, des gaz neufs 210, et d'échappement 93.

La figure 9 est une coupe transversale d'une réalisation encore plus élémentaire que les précédentes. Ici, dans le bloc moteur 4, est disposé rotativement un vilebrequin 3, et à ce bloc est rattaché rigidement un cylindre 5. Dans ce cylindre a été disposé rigidement un contre-cylindre 50, mais cette fois non pas transversal, mais dans le même sens que le cylindre lui-même 17. Un piston en W 51, c'est-à-dire un piston dans lequel a été retranchée une partie de forme cylindrique 220, et qui, par conséquent, lorsqu'il est représenté en coupe, a la forme d'un W, est glissé à la fois dans le cylindre 5 et le contre-cylindre 50.

Cette façon de faire permet de distinguer pour cette configuration, deux chambres séparées, soit, comme précédemment, la chambre d'admission des gaz usés 18, et la chambre du cylindre principal 17. Il est à noter que la disposition inverse donnerait le même résultat.

Dans le premier temps selon l'invention, le piston en W 51 se retrouve à son plus bas niveau, et ainsi, la chambre de pré-admission des gaz se retrouve dans un état de vide, donc de succion. L'on peut imaginer qu'à ce stade, un conduit situé dans la paroi du contre-cylindre vertical 50 annule l'étanchéité des deux chambres. II s'agit du conduit d'admission des gaz bruts. Dès lors, comme précédemment, les gaz usés se trouvant dans la chambre du cylindre principal 17 se retrouveront aspirés dans la chambre de pré-échappement 18.

Si l'on suppose, comme précédemment des conduits d'admission des gaz neufs 21 disposés dans la paroi du cylindre principal et reliés à un système de carburation, l'on notera que, comme précédemment, sous l'effet de la succion, les gaz neufs seront aspirés en remplacement des vieux gaz. Les gaz d'échappement pourront donc ainsi accepter un haut degré de restriction occasionné par une haute densité de filtration.

La figure 10 représente une coupe en trois dimensions de la précédente réalisation.

On y retrouve le bloc moteur 4, la bielle 2, le piston en W 51, le contre-cylindre vertical 50, les conduits d'admission des gaz usés 40, d'échappement 23, et d'admission des gaz neufs 21, ainsi que les chambres d'admission des gaz usés 18 et le cylindre principal 17.

La figure 11 représente une coupe schématique d'une deuxième version simplifiée de la présente invention. Ici, le piston a la forme d'un T renversé 300. Ce piston 300 est d'une part introduit dans un cylindre ayant une forme complémentaire 301, et d'autre part, relié par un moyen tel qu'une bielle 2, à un moyen tel qu'un vilebrequin 3. Cette manière de faire délimite les chambres d'admission des gaz brûlés 18, de même qu'un cylindre principal 17 Comme précédemment, les gaz brûlés seront d'abord pompée vers l'extérieur (flèches 302), créant ainsi, à la redescente du piston 300, un vide dans les chambres d'admission des gaz brûlés, qui succionnera de nouveaux gaz brûlés et, de cause à effet, aspirera de nouveaux gaz neufs dans le cylindre principal.

La figure 12 est une vue en trois dimensions de la réalisation précédente. On y retrouve le piston 300 en T renversé, le cylindre principal et auxiliaire, les chambres d'admission des gaz usés 18, les conduits d'admission de ceux-ci, le cylindre principal 17, les conduits d'entrée des gaz neufs (flèches 305) et d'échappement des gaz brûlés (flèches 302).

La figure 13 représente une coupe schématique de ce que pourrait être la réalisation d'une telle conception dans un moteur rotatif. II faudrait supposer deux pistons triangulaires, l'un convexe 60. l'autre concave 61. Le plus ventru des deux vidangerait presque cent pour cent des vieux gaz, et provoquerait un temps de succion similaire aux réalisations précédentes, aspirant par des conduites 400 disposées à cet effet dans la chambre complémentaire, les gaz usés qui succionneraient à leur tour les gaz neufs (voir flèches en partie inférieure). Dans le temps suivant, alors qu'un piston vidangerait les gaz (voir flèche en partie supérieure), le piston supplémentaire serait en état d'explosion.

La figure 14 représente une manière plus mécanique d'obtenir une évacuation maximale. Dans cette réalisation, un vilebrequin 3 est disposé rotativement dans un bloc moteur 4 et un cylindre 5 est rattaché rigidement à ce bloc. Un piston 1 est inséré dans ce cylindre 5 et est relié au vilebrequin 3 par un moyen tel une bielle 2. Une valve piston 70, rattachée à une came 74 coiffe la tête du cylindre et, tout en se dégageant de la valve fixe 71 s'ouvrant un tour sur deux, s'abaisse vers le piston 1 de manière à réduire la chambre de combustion à zéro et ainsi à forcer l'évacuation complète des gaz en acceptant un haut taux de restriction causé par des filtres de haute densité.

La figure 15 représente une autre façon mécanique d'obtenir une évacuation totale des gaz. Cette fois ci, un vilebrequin 3 est monté rotativement dans le bloc-moteur 4, supporté à l'un de ses côtés sur un axe 80. A ce bloc est rattaché rigidement un cylindre 5 dans lequel est disposé de façon coulissante un piston 1. Ce piston 1 est relié à une bielle 2. Cette bielle 2 est reliée à son autre extrémité au maneton du vilebrequin par l'entremise d'une came 83. Cette came 83 est montée sur le maneton du vilebrequin qui est muni d'un engrenage 84, lequel engrenage 84 est couplé à un engrenage 85 fixé rigidement à l'axe 80 traversant le manchon principal du vilebrequin et se reliant rigidement au corps du moteur.

Par le calibrage des engrenages de cette configuration, l'on peut influencer la came 83 du maneton de telle sorte qu'à raison de un tour sur deux, l'enfoncement du piston dans le cylindre soit total, et force ainsi la totale évacuation des gaz, et par conséquent une haute tolérance à la restriction.

## Revendications

1. Moteur énergétique comprenant au moins un ensemble, chaque ensemble comprenant:
- un bloc moteur (4) ;
- un cylindre (5) rattaché rigidement au bloc moteur (4);
- un moyen de propulsion tel qu'un agencement de bielle (2) et de vilebrequin (3), ce dernier étant monté rotativement dans le bloc moteur (4) ;
- un piston inséré dans le cylindre (5) et relié indirectement au moyen de propulsion, ledit piston délimitant de façon mobile des chambres de gaz, dont :
• une première chambre (17); et
• une seconde chambre de pré-échappement de gaz usés (18); ladite seconde chambre (18) ayant un état d'expansion puis un état de dépression simultanément à un état d'expansion de ladite première chambre (17); ladite seconde chambre (18) et ladite première chambre (17) étant connectées à une fin de la phase d'expansion, provoquant une aspiration de gaz brûlés de ladite première chambre (17) vers ladite seconde chambre (18) et une aspiration de gaz neufs d'un carburateur (6) vers ladite première chambre (17); lesdites première (17) et seconde (18) chambres se réduisant alors, provoquant une compression et une explosion des gaz neufs et une sortie des gaz usés.

2. Moteur selon la revendication 1, dans lequel chaque ensemble comprend en outre une troisième chambre (19) agissant comme pompe à air additionnelle.

3. Moteur selon la revendication 1, dans lequel chaque ensemble comprend un piston-cylindre (11) et un contre-piston (12) inséré dans ledit piston-cylindre (11); ladite première chambre (17) étant comprise entre une tête dudit piston-cylindre (11) et une tête du cylindre (5), et ladite seconde chambre (18) étant comprise entre une partie inférieure dudit contre-piston (12) et une partie inférieure dudit piston-cylindre (11).

4. Moteur selon la revendication 1, dans lequel chaque ensemble comprend un piston en forme de H (36) et un contre-cylindre (35), ledit piston en forme de H (36) étant inséré de façon coulissante dans le cylindre (5) de telle sorte que chaque côté de ce H se retrouve de part et d'autre dudit contre-cylindre (35).

5. Moteur selon la revendication 1, dans lequel chaque ensemble comprend un cylindre secondaire (50) et un piston en W (51) glissé à la fois dans ledit cylindre secondaire (50) et le cylindre (5).

6. Moteur selon la revendication 1, comprenant deux ensembles dont chacun est constitué d'un piston en T (47) et d'un contre-cylindre (35); ledit piston en T (47) étant inséré dans le cylindre (5) et ayant un manchon (13) inséré dans un passage dudit contre-cylindre (35); ladite première chambre (17) étant formée entre une tête dudit piston en T (47) et le cylindre (5), et ladite seconde chambre (18) étant formée entre une paroi supérieure dudit contre-cylindre (35) et une surface interne dudit piston en T (47), une dilatation d'une seconde chambre (18) d'un premier des deux ensembles étant couplée au cylindre (5) d'un second des deux ensembles de manière à en aspirer les gaz usés lorsque le piston en T (47) en est au plus bas, aspirant ainsi les gaz neufs, ledit second ensemble explosant ses gaz dans sa partie supérieure, alors que ledit premier ensemble expulse ses gaz dans sa partie inférieure.

7. Moteur selon la revendication.1, dans lequel chaque ensemble comprend un piston en T renversé (300), et ladite seconde chambre (18) et ladite première chambre (17) sont obtenues par une combinaison d'ensembles complémentaires dans laquelle se déplace ledit piston en T renversé (300).

## Patentansprüche

1. Energiemotor, umfassend mindestens eine Einheit, wobei jede Einheit umfasst:
- einen Motorblock (4),
- einen Zylinder (5), der starr am Motorblock (4) befestigt ist,
- Antriebsmittel, wie beispielsweise eine Anordnung aus Pleuelstange (2) und Kurbelwelle (3), wobei diese letztgenannte im Motorblock (4) drehbar gelagert ist,
- einen Kolben, der in den Zylinder (5) eingeführt und indirekt mit den Antriebsmitteln verbunden ist, wobei der Kolben auf bewegliche Weise Gaskammern begrenzt, darunter:
• eine erste Kammer (17), und
• eine zweite Auslass-Vorkammer (18) für Abgas, wobei die genannte zweite Kammer (18) einen Ausdehnungszustand- und Unterdruckzustand hat, der zeitgleich mit einem Ausdehnungszustand der ersten Kammer (17) vorliegt, wobei die zweite Kammer (18) und die erste Kammer (17) am Ende der Ausdehnungsphase verbunden sind, was ein Ansaugen von verbrannten Gasen aus der ersten Kammer (17) in Richtung der zweiten Kammer (18) und ein Ansaugen von frischen Gasen aus einem Vergaser (6) in Richtung der genannten ersten Kammer (17) verursacht, wobei sich dann die erste Kammer (17) und die zweite Kammer (18) verkleinern, was eine Verdichtung und eine Explosion der frischen Gase und ein Austreten der Abgase verursacht.

2. Motor nach Anspruch 1, bei dem jede Einheit ferner eine dritte Kammer (19) umfasst, die wie eine zusätzliche Luftpumpe wirkt.

3. Motor nach Anspruch 1, bei dem jede Einheit einen Zylinderkolben (11) und einen Gegenkolben (12) umfasst, der in den Zylinderkolben (11) eingeführt ist, wobei sich die erste Kammer (17) zwischen einem Kopf des Zylinderkolbens (11) und einem Kopf des Zylinders (5) und die zweite Kammer (18) zwischen einem unteren Abschnitt des Gegenkolbens (12) und einem unteren Abschnitt des Zylinderkolbens (11) befindet.

4. Motor nach Anspruch 1, bei dem jede Einheit einen H-förmigen Kolben (36) und einen Gegenzylinder (35) umfasst, wobei der H-förmige Kolben (36) verschiebbar in den Zylinder (5) eingeführt ist, derart, dass sich zu beiden Seiten des Gegenzylinders (35) jeweils eine Seite dieses H befindet.

5. Motor nach Anspruch 1, bei dem jede Einheit einen Nebenzylinder (50) und eine W-förmigen Kolben (51) umfasst, der gleichzeitig in dem Nebenzylinder (50) und dem Zylinder (5) gleitet.

6. Motor nach Anspruch 1, umfassend zwei Einheiten, die jeweils aus einem T-förmigen Kolben (47) und einem Gegenzylinder (35) gebildet sind, wobei der T-förmige Kolben (47) in den Zylinder (5) eingeführt ist und eine Hülse (13) hat, die in einen Durchlass des Gegenzylinders (35) eingeführt ist, wobei die erste Kammer (17) zwischen einem Kopf des T-förmigen Kolbens (47) und dem Zylinder (5) und die zweite Kammer (18) zwischen einer oberen. Wand des Gegenzylinders (35) und einer Innenfläche des T-förmigen Kolbens (47) ausgebildet ist, wobei eine Ausdehnung einer zweiten Kammer (18) einer ersten der beiden Einheiten mit dem Zylinder (5) einer zweiten der beiden Einheiten verbunden ist, derart, dass daraus die Abgase angesaugt werden, wenn sich der T-förmige Kolben (47) in derselben am unteren Totpunkt befindet, wodurch die frischen Gase angesaugt werden, wobei die zweite Einheit ihre Gase in ihrem oberen Abschnitt zur Explosion bringt, wogegen die erste Einheit ihre Gase in ihrem unteren Abschnitt ausstößt.

7. Motor nach Anspruch 1, bei dem jede Einheit einen Kolben (300) in Form eines umgedrehten T enthält, und die zweite Kammer (18) und die erste Kammer (17) durch eine Kombination aus komplementären Einheiten erhalten werden, in der sich der Kolben (18) in Form eines umgedrehten T ver schiebt.

## Claims

1. An energetic engine comprising at least one assembly, each assembly comprising:
· an engine block (4);
· a cylinder (5) rigidly connected to the engine block (4);
· propulsion means such as a connecting rod (2) and crankshaft (3) arrangement, the crankshaft being rotatably mounted in the engine block (4); and
· a piston inserted in the cylinder (5) and indirectly connected to the propulsion means, said piston movably defining gas chambers, the chambers comprising:
· a first chamber (17); and
· a second chamber (18) for waste gas pre-exhaust, said second chamber having an expansion state and then a suction state simultaneously with an expansion state of the first chamber (17); said second chamber (18) and said first chamber (17) being interconnected at an end of the expansion stage, causing burnt gas to be sucked from said first chamber (17) towards said second chamber (18), and causing new gas to be sucked from a carburetor (6) towards said first chamber (17); said first and second chambers (17, 18) then becoming smaller, causing the new gas to be compressed and to explode and causing the waste gas to be expelled.

2. An energetic engine according to claim 1, in which each assembly further comprises a third chamber (19) acting as an additional air pump.

3. An energetic engine according to claim 1, in which each assembly comprises a cylinder-piston (11) and a counter-piston (12) inserted in said cylinder-piston (11); said first chamber (17) being comprised between a head of said cylinder-piston (11) and a head of the cylinder (5), and said second chamber (18) being comprised between a bottom portion of said counter-piston (12) and a bottom portion of said cylinder-piston (11).

4. An energetic engine according to claim 1, in which each assembly comprises an H-shaped piston (36) and a counter-cylinder (35), said H-shaped piston (36) being slidably inserted in the cylinder (5) in such a manner that the sides of the H-shape lie on opposite sides of said counter-cylinder (35).

5. An energetic engine according to claim 1, in which each assembly includes a secondary cylinder (50) and a W-shaped piston (51) sliding both in said secondary cylinder (50) and in the cylinder (5).

6. An energetic engine according to claim 1, comprising two assemblies, each of which is constituted by a T-shaped piston (47) and a counter-cylinder (35); said T-shaped piston (47) being inserted in the cylinder (5) and having a sleeve (13) inserted in a passage of said counter-cylinder (35); said first chamber (17) being formed between a head of said T-shaped piston (47) and the cylinder (5), and said second chamber (18) being formed between a top wall of said counter-cylinder (35) and an internal surface of said T-shaped cylinder (47), an expansion of the second chamber (18) of a first one of the two sets being coupled to the cylinder (5) of a second one of the two sets in such a manner as to suck in the waste gas when the T-shaped piston (47) is at bottom dead-center, thus sucking in the new gas, said second assembly exploding its gas in its top portion while said first assembly is expelling its gas from its bottom portion.

7. An energetic engine according to claim 1, in which each assembly has an upside-down T-shaped piston (300) and said second chamber (18) and said first chamber (17) are obtained by a combination of complementary assemblies in which said upside-down T-shaped piston (300) moves.
